**Europäisches Patentamt**

(19) **European Patent Office**

**Office européen des brevets**

(11) Numéro de publication: **0 033 044**
**B1**

(12) # FASCICULE DE BREVET EUROPEEN

(45) Date de publication du fascicule du brevet:
25.04.84

(51) Int. Cl.³: **F 02 K 1/12**

(21) Numéro de dépôt: **80401850.5**

(22) Date de dépôt: **23.12.80**

(54) **Dispositif de tuyère de turboréacteur.**

(30) Priorité: **25.01.80 FR 8001814**

(43) Date de publication de la demande:
**05.08.81 Bulletin 81/31**

(45) Mention de la délivrance du brevet:
**25.04.84 Bulletin 84/17**

(84) Etats contractants désignés:
**DE FR GB SE**

(56) Documents cités:
**FR - A - 1 590 671**
**FR - A - 1 600 362**
**FR - A - 2 030 532**
**FR - A - 2 262 201**
**US - A - 3 831 493**

(73) Titulaire: **SOCIETE NATIONALE D'ETUDE ET DE CONSTRUCTION DE MOTEURS D'AVIATION, "S.N.E.C.M.A.", 2 Boulevard Victor, F-75015 Paris (FR)**

(72) Inventeur: **Camboulives, André Alphonse M. L., 25, rue Jenner, F-91600 Savigny sur Orge (FR)**
Inventeur: **Mandet, Gérard Marcel François, 1, Villa Dauphiné Epinay Sous Senart, F-91800 Brunoy (FR)**

(74) Mandataire: **Moinat, François et al, S.N.E.C.M.A. Service des Brevets Boîte Postale 81, F-91003 Evry Cedex (FR)**

BUNDESDRUCKEREI BERLIN

## Dispositif de tuyère de turboréacteur

La présente invention concerne un dispositif de tuyère appliqué à une tuyère d'éjection placée à l'extrémité aval d'un canal d'éjection de turboréacteur, du type comportant:

— au moins deux ensembles annulaires de volets d'inclinaison réglable par rapport à l'axe desdits ensembles, constituant une tuyère de type convergent-divergent à col continu,

— un élément de structure, de forme annulaire, relié de façon articulée à chaque volet du premier ensemble,

— une série de dispositifs de commande dont chacun est associé à un volet de chacun des deux dits ensembles pour régler l'inclinaison de ces volets par rapport à l'axe des deux ensembles,

— et une série de dispositifs dits de synchronisation reliant entre eux tous les dispositifs de commande de manière à ce que ces dispositifs de commande forment un ensemble mécanique du genre cylindrique radialement déformable ayant un seul degré de liberté.

On connait par le brevet français 2 030 532, un dispositif de tuyère de ce type, dans lequel l'élément de structure annulaire est relié à chaque volet, pour la suspension de ce dernier sur ledit élément de structure, par deux tringleries indépendantes comprenant chacune un levier faisant partie d'un dispositif de commande respectif du volet. Cette disposition connue nécessite donc l'utilisation, pour chaque volet de deux dispositifs de commande ainsi que deux tringleries de suspension. De plus, ces dispositifs de commande comprennent chacun un vérin dont le carter est articulé sur un carénage secondaire. La liaison entre la tuyère et un canal de turboréacteur auquel elle est associée, est assurée au moyen de paires de bras articulés formant chacun une genouillère dont le point central est articulé sur le carénage secondaire et dont les points extrêmes sont articulés, d'une part, sur l'élément de structure annulaire et, d'autre part, sur l'extrémité aval du canal de turboréacteur. A chaque volet commandé est associé un volet auxiliaire assurant la continuité et l'étanchéité entre lesdits volets commandés et le canal fixe.

En outre, une tuyère convergente-divergente est décrite par le brevet français 2 164 594 et cette tuyère comprend une série de volets principaux auxquels sont associés des volets d'équilibrage disposés vers l'avant du moteur et articulés sur leur bord avant, une série de volets divergents dont les extrémités avant sont reliées aux extrémités arrière des volets principaux et des moyens de connexion reliant les extrémités arrière des volets divergents à la structure du moteur. Les volets principaux sont reliés par une tringlerie à un anneau se déplaçant lingitudinalement sous l'action de vérins montés sur le canal.

L'invention vise notamment à simplifier la construction d'un tel dispositif de tuyère.

Ce but est atteint conformément à l'invention du fait que l'élément de structure est séparée du canal et constitue un élément de support portant à la fois les volets du premier ensemble et les dispositifs de commande.

De cette façon, on simplifie la construction de la tuyère et son montage sur l'appareil auquel elle est destinée, tout ensemble d'efforts à résultante radiale étant supporté par ledit élément de support.

Avantageusement, chaque volet du premier ensemble constituant le convergent est articulé, par son extrémité amont, relativement au sens de déplacement des gaz dans la tuyère, autour d'un axe sur l'élément de support et chaque volet du second ensemble constituant le divergent est articulé, par son extrémité amont, autour d'un axe sur l'extrémité aval d'un volet de convergent.

Avantageusement, chaque dispositif de commande comprend au moins un premier élément de transmission d'effort monté rotatif autour d'un axe sur l'élément de support et associé pour son entraînement en rotation à un organe moteur porté par ledit élément de support, cet élément de transmission d'effort ayant une surface de portée dite d'action espacée dudit axe de rotation, susceptible d'agir sur une surface de portée dite de réception du volet de convergent correspondant.

Avantageusement, les éléments de transmission d'effort sont reliés entre eux de manière à constituer une chaîne cinématique de synchronisation.

Avantageusement, lesdites surfaces de portée sont conformées de manière à pouvoir rouler sans glisser l'une sur l'autre lors d'un déplacement en rotation des volets et des éléments de transmission d'effort et de façon que la trajectoire de la première surface de portée de l'élément de transmission d'effort soit sensiblement perpendiculaire au plan de la surface de portée du volet de convergent correspondant.

Avantageusement, ladite surface de portée de réception du volet de convergent se trouve à l'extrémité aval dudit volet, relativement au sens de déplacement des gaz dans la tuyère.

Ce dispositif de tuyère s'applique avantageusement aux systèmes de commande des volets d'une tuyère convergente-divergente à col continu et à volets froids, comportant un troisième ensemble annulaire de volets d'inclinaison réglable par rapport à l'axe dudit ensemble, du type volets froids, lesdits volets étant, d'une part, articulés à leur extrémité amont sur des attaches fixées sur l'élément de support et étant, d'autre part, articulés à leur extrémité aval sur l'extrémité aval des volets de divergent.

Cette tuyère est du type à synchronisation cylindrique. Mais contrairement au dispositif décrit dans le brevet français 2 030 532 précité, selon une particularité de l'invention, les volets ne sont plus attaqués directement par des vérins, mais ils le sont par l'intermédiaire de leviers de commande disposés en chicane avec un dispositif de synchronisation, ce dernier comprenant des biellettes de liaison orientées parallèlement aux génératrices d'un cylindre d'axe commun avec la tuyère (d'où le nom de synchronisation cylindrique) ainsi que deux leviers réunis par un axe de torsion.

Ainsi, l'une des particularités de l'invention réside dans le fait que tous les éléments mobiles de la tuyère sont accrochés sur un anneau dans lequel »circulent« tous les efforts du système (ces efforts y étant »bouclés«), ce qui permet d'alléger la structure du canal de turboréacteur auquel la tuyère est adaptée; la tuyère n'introduit dans le canal que des efforts axiaux qui résultent des trainées s'exerçant sur les volets.

Une autre particularité est que l'un des points d'articulation du système est constitué par une came, capable de roulement sans glissement.

Une troisième particularité est constituée par le fait que tous les »renvois« se font »à bras de levier maximum«. On ne peut certes pas avoir, pour des pièces en mouvement, des articulations rigoureusement orthogonales en permanence, mais il est avantageux d'éviter que les angles entre la direction de la force motrice et celle de l'axe du levier ou volet sur lequel agit cette force ne s'éloignent pas trop de 90°. Cette particularité améliore la précision en évitant les répercussions trop importantes des déformations, dilatations ou influences des tolérances et permet également de réduire à sa valeur minimale l'effort demandé à l'organe moteur.

Les avantages d'encombrement et de masse obtenus par une tuyère selon l'invention sont encore accrus du fait de la présence d'un ensemble de volets froids rétablissant la continuité aérodynamique externe de la tuyère avec le fuselage ou la nacelle det de l'asservissement de la position des volets divergents et froids à celle des volets convergents. En effet, dans ce cas, les volets froids sont articulés sur le même anneau, ce qui fait que les efforts s'exerçant sur les volets divergents et sur les volets froids seront également »bouclés« sur l'anneau, à l'exception des seuls efforts de trainée (ou poussée) sur ces volets.

Avantageusement, ladite tuyère est reliée audit canal de circulation des gaz par l'intermédiaire de biellettes parallèles à l'axe du canal.

Les avantages et caractéristiques de l'invention seront mieux compris à la lecture de la description qui va suivre d'un exemple de réalisation correspondant à une tuyère convergente divergente à col continu et à volets froids, le cas d'une tuyère convergente seule s'en déduisant facilement. Cette description est faite en référence aux dessins annexés dans lesquels:

la figure 1 est une vue partielle en élévation et en coupe verticale suivant I-I de la figure 2, d'un dispositif de tuyère selon un mode de réalisation de l'invention,

la figure 2 est une vue partielle en plan avec arrachement de la figure 1, et

la figure 3 est une vue partielle schématique en perspective du dispositif des figures 1 et 2.

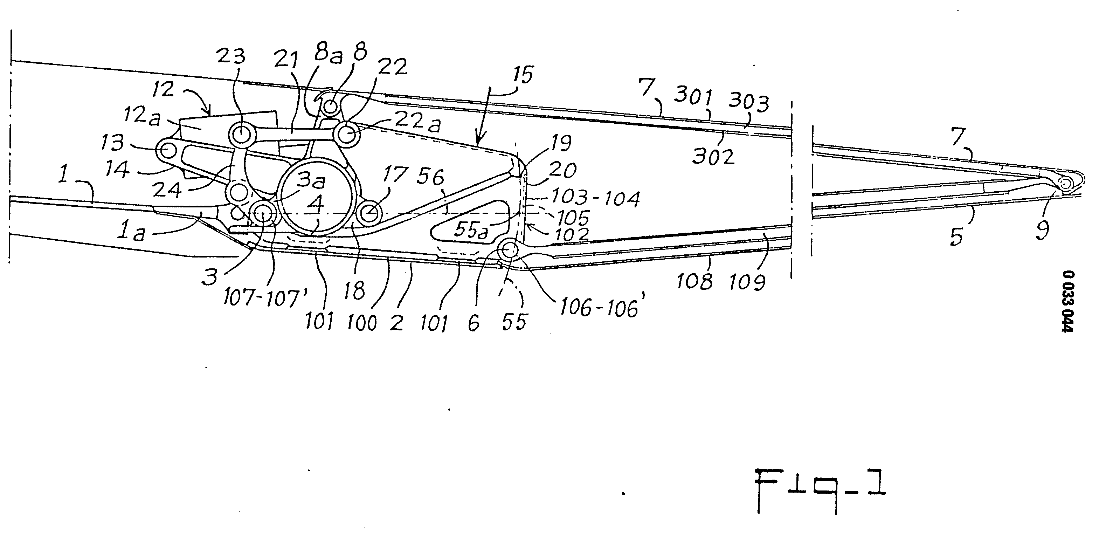

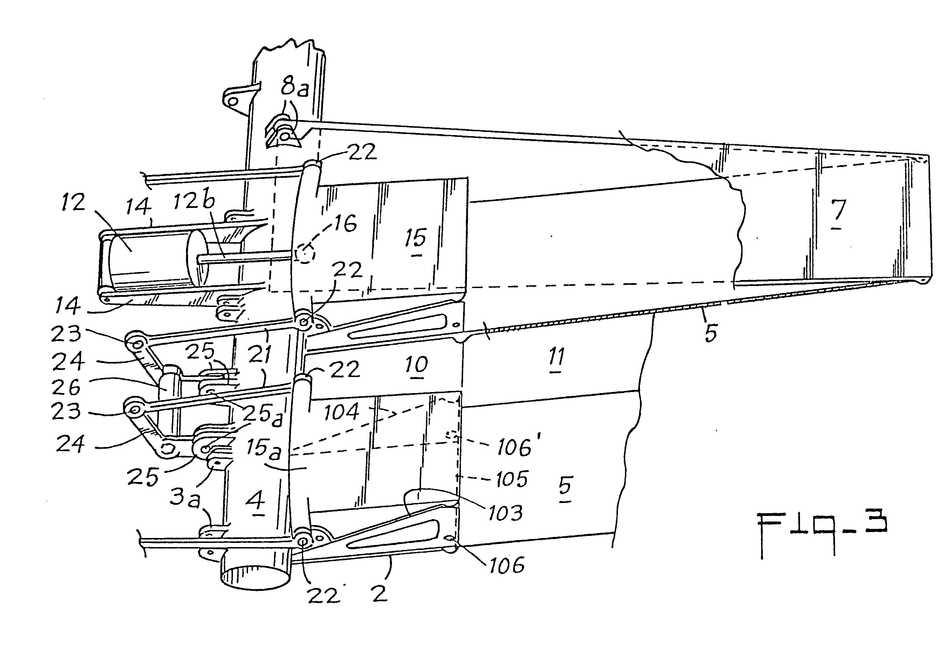

Le dispositif de tuyère représenté sur les figures 1 à 3 est disposé à l'extrémité aval d'un canal fixe 1, et il comprend:

— un premier ensemble annulaire de volets, dits de convergent, 2 dont chacun est articulé, par son extrémité amont, autour d'un axe 3, au moyen de chapes 3a fixées sur un anneau porteur 4 de forme torique coaxial audit canal 1;
— un deuxième ensemble annulaire de volets, dits de divergent, 5 dont chacun est articulé, par son extrémité amont, autour d'un axe 6, sur l'extrémité aval d'un volet de convergent 2 correspondant,
— et un troisième ensemble annulaire de volets, dits volets froids, 7 dont chacun est articulé, d'une part, par son extrémité amont, autour d'un axe 8 au moyen de chapes ou de bras porte-axe 8a fixés sur l'anneau porteur 4 et, d'autre part, par son extrémité aval, autour d'un axe 9, au moyen de chapes 9a, fixées sur l'extrémité aval d'un volet de divergent 5 correspondant.

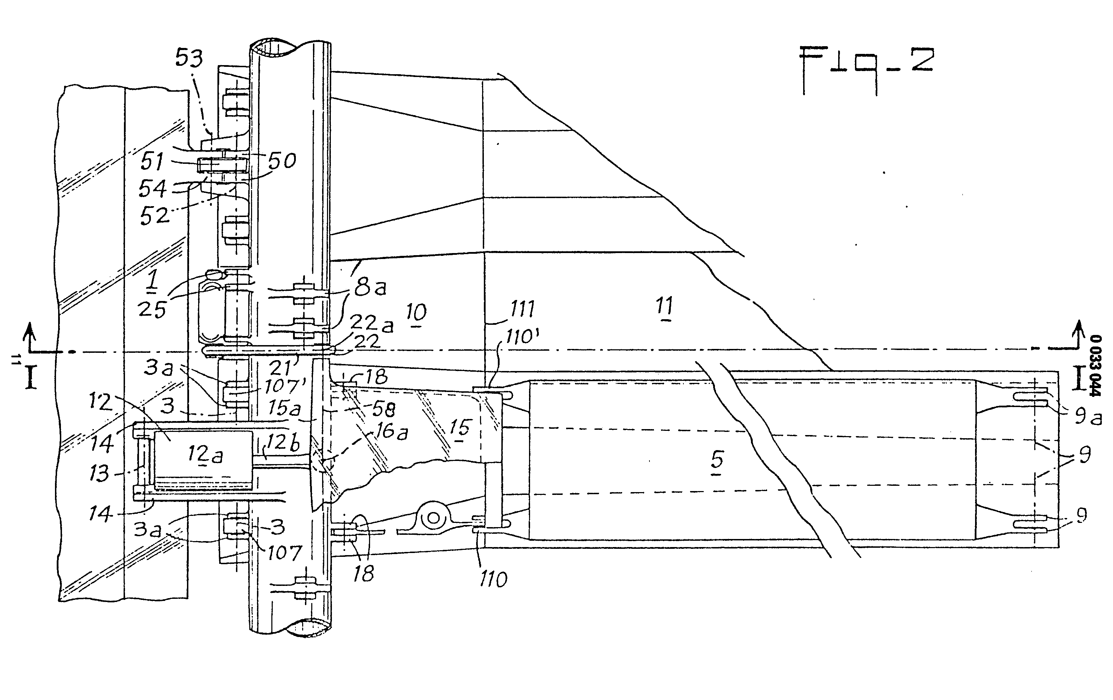

Entre deux volets de convergent 2 voisins et, également, entre deux volets de divergent 5 voisins, se trouve, comme il est connu, un volet suiveur, respectivement 10 et 11, qui assure l'étanchéité de la jonction entre lesdits volets (figure 2).

Les volets 2 et les volets 5 constituent, respectivement, le tronçon convergent et le tronçon divergent d'une tuyère convergente-divergente coaxiale et faisant suite au canal 1.

La commande de la conicité des tronçons convergents et divergents de ladite tuyère est assurée par un dispositif comprenant un ensemble de vérins 12 dont chacun est associé à un volet de convergent 2; chaque vérin 12 est articulé, d'une part, par son carter 12a, autour d'un axe 13, à l'extrémité d'une chape 14 fixée sur l'anneau porteur 4, et, d'autre part, par l'extrémité libre de sa tige 12b, sur un palonnier 15, par l'intermédiaire d'une articulation à rotule 16; chaque palonnier 15 est lui-même articulé sur l'anneau porteur 4 autour d'un axe 17 au moyen de chapes 18 fixées sur ledit anneau 4; l'axe 17 est espacé de l'articulation à rotule 16. Les palonniers 15 présentent chacun une forme prismatique à section triangulaire; l'axe de rotation 17 occupe l'un des sommets de ladite section triangulaire. Chaque palonnier est susceptible d'agir sur un volet de convergent 2 correspondant, par contact d'une surface de portée 19 dudit palonnier sur une surface de portée 20 dudit volet 2; les surfaces 19 et 20 s'étendent le long du bord aval, respectivement, du palonnier 15 et du volet 2 (figure 1).

On rappelle que la »synchronisation« est l'ensemble du dispositif assurant la disposition convenable de chaque volet par rapport à l'ensemble des autres. Cette synchronisation de l'ensemble des éléments 2, 5, 7, 15 est assurée par une liaison cinématique circulaire en chaîne entre tous les palonniers 15. Cette liaison cinématique comprend une paire de biellettes, dites de synchronisation, 21 associée à chaque palonnier 15, biellettes dont chacune est articulée, d'une part, sur ledit palonnier 15 par une articulation à rotule 22 et, d'autre part, par l'intermédiaire d'une articulation à rotule 23, sur une extrémité d'un levier de renvoi 24 dont l'autre extrémité est articulée sur l'anneau porteur 4 autour d'un axe 25a, au moyen d'une chape 25 fixée sur l'anneau 4. Avantageusement, ces biellettes 21 sont parallèles à l'axe et au même rayon par rapport à cet anneau.

Les axes d'articulation 3, 6, 8, 9, 13, 17 associés à un même ensemble (palonnier 15, volet convergent 2 correspondant, volet divergent 5 articulé audit volet 2, volet froid articulé 7 audit volet 5), sont parallèles à une direction fixe transversale par rapport à l'axe de la tuyère. Chaque articulation à rotule 22 est située à une extrémité respective du bord amont supérieur 15a du palonnier 15; de préférence, les centres 22a des articulations 22 associées à un palonnier 15, et celui 16a de l'articulation à rotule 16 de ce palonnier 15 sont alignés suivant une même droite 58 parallèle à ladite direction fixe; le point 16a est de préférence situé au milieu du segment de droite délimité par les centres 22a des articulations 22 des biellettes 21 d'une même paire. Les deux leviers de renvoi 24 associés aux biellettes 21 d'une même paire, sont reliés entre eux par un tube de torsion 26.

Selon l'exemple représenté, chaque volet de convergent 2 est constitué d'une peau interne 100 sur laquelle est vissée ou soudée en 101 une structure prismatique à section triangulaire 102 qui comporte deux nervures en équerre 103, 104, reliées par leur base par une cloison 105; l'angle droit des équerres comporte des perçages 106, 106' pour le passage d'axes d'articulation 6 des volets de divergent 5.

Le sommet amont des équerres comporte deux oreilles 107, 107' qui s'articulent chacune dans une chape correspondant 3a de l'anneau porteur 4.

Le troisième sommet des équerres 103, 104 comporte la portée 20 sur laquelle porte la portée de came 19 des palonniers 15.

Chaque volet de divergent 5 est constitué d'une peau 108 et d'une structure en nids d'abeilles 109 qui porte les chapes 110, 110' correspondant aux perçages 106, 106' du volet de convergent 2 correspondant.

L'extrémité aval des volets de divergents 5 comporte également les chapes 9a qui s'articulent au moyen d'unaxe avec des chapes correspondantes des volets froids 7.

Des passages peuvent être ménagés entre les charnières pour le passage de l'air de ventilation.

L'extrémité aval de chaque volet suiveur convergent 10 est articulée en 111 sur l'extrémité amont du volet suiveur divergent 11 correspondant.

Les bords latéraux des volets suiveurs 10, 11 sont encastrés d'une façon classique dans un sillon (non représenté) des bords latéraux des volets commandés 2, 5 adjacents.

Les volets froids 7 assurent le raccordement aérodynamique de la tuyère et de l'avion.

Ils sont constitués d'une peau externe 301, d'une peau interne 302, ces éléments 301, 302 étant reliés entre eux par une structure en nids d'abeilles 303. L'extrémité amont des volets 7 s'articule en 8, sur les pattes 8a de l'anneau 4 et, leur extrémité aval, en 9 sur l'extrémité aval des volets de divergents 5.

Les vérins 12 sont, pour des raisons d'encombrement des vérins hydrauliques mais pourraient également être pneumatiques, à vis, etc... Ils sont articulés par l'axe 13 sur deux pattes 14 de l'anneau 4.

La tige 12b est articulée en 16a sur les palonniers 15.

L'anneau 4 est d'autre part attaché au canal proprement dit par des biellettes 51, sensiblement parallèles à l'axe, articulées d'une part autour d'un axe 52 sur des chapes 50, de l'anneau 4, d'autre part autour d'un axe 53 sur des chapes 54 du canal 1.

L'anneau porteur 4 de forme torique, constitue une structure sur laquelle sont articulés par des pattes, tous les organes mobiles de la tuyère, et notamment:

- 3a articulation des volets de convergents 2
- 25 renvois de synchronisation 24
- 8a articulation des volets froids 7
- 14 articulation des vérins 12
- 50 articulation de biellettes de liaison canal-tuyère 51
- 18 articulation des palonniers 15.

Avantageusement, les portées 19 et 20 sont conformées de telle sorte que la portée 19 roule sans glisser pendant le mouvement des volets 2, sur la portée 20 de la structure des volets de convergents 2.

Le dispositif de tuyère qui vient d'être décrit présente notamment les avantages suivants:

a) Les vérins 12 agissent sur les volets de convergents 2 au droit du col de la tuyère convergente-divergente par l'intermédiaire de la portée 19 des palonniers 15 dont l'effort s'exerce perpendiculairement au plan du volet 2, d'où un maximum d'efficacité, et un minimum d'encombrement des vérins.

b) Le déplacement relatif entre le système de commande 12, 15 et le volet commandé 2 est extrêmement faible, ce qui fait que les frottements entre les surfaces de portée 19, 20 sont extrêmement réduits. On peut même, par une forme particulière des surfaces 19, 20 rendre ces frottements pratiquement nuls.

c) Toutes les pièces mobiles de la tuyère s'accrochent sur l'anneau 4. Cet anneau est lui-même accroché sur le canal 1. Il résulte de cette disposition que le canal 1 n'est soumis qu'à des efforts axiaux induits par la traînée des volets 2, 5, 7. Les efforts radiaux passent dans l'anneau 4 en efforts internes. De plus, les différences de dilatations entre le canal proprement dit et la structure de tuyère n'introduisent pas d'efforts thermiques, mais sont absorbés par une légère inclinaison des biellettes (qui peut d'ailleurs être compensée à chaud). Cette disposition permet d'éviter d'avoir à renforcer par un caissonnage la zone du canal 1 où s'accroche la tuyère. Dans certains cas, on peut cependant prévoir un léger épaississement 1a du canal 1.

d) La pression des gaz plaque en permanence la portée 20 des volets de convergents 2 sur la portée 19 des palonniers 15, et cet effort est transmis aux vérins 12.

e) Avantageusement, le point milieu 55a de l'arc de cercle 55 sur lequel se déplace le point d'application de l'effort du palonnier 15 sur le volet commandé 2 se trouve sur le prolongement d'une ligne droite 56 joignant le point d'articulation 3 du volet 2 sur l'anneau 4 au point d'articulation 17 du palonnier 15; il en résulte une répartition équilibrée des efforts. En outre, grâce à cette disposition, le déplacement axial relatif entre palonniers 15 et volet commandé 2 est le plus faible possible, les efforts supportés étant toujours perpendiculaires au plan du volet 2.

f) Au roulage de l'avion, moteur arrêté, les volets 2, 5 7 n'ont pas tendance à battre et »ferrailler« dans la tuyère. La synchronisation 15, 21 à 26 referme l'ensemble des volets 2, 5, 7 dans la limite du jeu des axes.

Le fonctionnement de la tuyère qui vient d'être décrite est le suivant. Les vérins 12 attaquent les palonniers 15, qui, par l'intermédiaire des portées 19, 20 commandent les volets de convergents 2 au droit du col de la tuyère. Les volets de convergents 2 entraînent les volets de divergents 5 qui asservissent à leur tour les volets froids 7.

Tout le système est auto-synchronisé par

— les biellettes 21
— les renvois de synchronisation 24, 26
— les volets froids 7.

L'effort résultant de la pression des gaz sur les volets 2, 5, 10, 11 est dirigé à une incidente de 90° sur les portées 19 des palonniers de commande 15, cet effort est réparti de façon uniforme, sur tout le pourtour de la tuyère par ces derniers et la synchronisation 21 à 26.

Il est à noter que les éléments de transmission de forces que sont les tiges de vérin 12b, les bielles 21 et les surfaces de portée 19 ou 20 appliquent ou transmettent des forces toujours orientées, par rapport aux bras de levier correspondants, selon un angle assez voisin de 90°.

**Revendications**

1. Dispositif de tuyère applique à une tuyère d'éjection placée à l'extrémité aval d'un canal (1) d'éjection de turboréacteur, du type comportant

— au moins deux ensembles annulaires de volets (2, 5) d'inclinaison réglable par rapport à l'axe desdits ensembles, constituant une tuyère du type convergent-divergent à col continu,
— un élément de structure (4), de forme annulaire, relié de façon articulée à chaque volet (2) du premier ensemble,
— une série de dispositifs de commande dont chacun est associé à un volet de chacun des deux dits ensembles pour régler l'inclinaison de ces volets (2, 5) par rapport à l'axe des deux ensembles,
— et une série de dispositifs dits de synchronisation (21—26) reliant entre eux tous les dispositifs de commande de manière à ce que ces dispositifs de commande forment un ensemble mécanique du genre cylindrique radialement déformable ayant un seul degré de liberté,

caractérisé en ce que l'élément de structure annulaire (4) est séparé du canal et constitue un élément de support portant à la fois les volets (2) du premier ensemble et les dispositifs de commande.

2. Dispositif de tuyère de turboréacteur selon la revendication 1 caractérisé en ce que chaque volet (2) du premier ensemble constituant le convergent est articulé, par son extrémité amont, relativement au sens de déplacement des gaz dans la tuyère, autour d'un axe (3) sur l'élément de support (4) et chaque volet (5) du second ensemble constituant le divergent est articulé, par son extrémité amont, autour d'un axe (6) sur l'extrémité aval d'un volet de convergent (2).

3. Dispositif de tuyère de turboréacteur selon l'une quelconque des revendications 1 et 2 caractérisé en ce que chaque dispositif de commande comprend au moins un élément de transmission d'effort (15) monté rotatif autour d'un axe (17) sur l'élément de support (4) et associé pour son entraînement en rotation à un organe moteur (12) porté par ledit élément de support (4), cet élément de transmission d'effort (15) ayant une surface de portée (19) dite d'action espacée dudit axe de rotation (17), susceptible d'agir sur une surface de portée (20) dite de réception du volet de convergent (2) correspondant.

4. Dispositif de tuyère de turboréacteur selon la revendication 3 caractérisé en ce que les éléments de transmission d'effort (15) sont reliés entre eux de manière à constituer une chaîne cinématique de synchronisation.

5. Dispositif de tuyère de turboréacteur selon l'une quelconque des revendications 3 et 4 caractérisé en ce que lesdites surfaces de portées (19, 20) sont conformées de manière à pouvoir rouler sans glisser l'une sur l'autre lors d'un déplacement en rotation des volets (2) et des éléments de transmission d'effort (15) et de façon que la trajectoire de la surface de portée (19) de l'élément de transmission d'effort (15) soit sensiblement perpendiculaire au plan de la surface de portée (20) du volet de convergent (2) correspondant.

6. Dispositif de tuyère de turboréacteur selon l'une quelconque des revendications 3 à 5 caractérisé en ce que ladite surface de portée (20) de réception du volet de convergent (2) se trouve à l'extrémité aval dudit volet, relativement au sens de déplacement des gaz dans la tuyère.

7. Dispositif de tuyère de turboréacteur selon l'une quelconque des revendications 1 à 6 caractérisé en ce que ladite tuyère comporte un troisième ensemble annulaire de volets (7), d'inclinaison réglable par rapport à l'axe dudit ensemble, du type volets froids, lesdits volets (7) étant, d'une part, articulés à leur extrémité amont sur des chapes (8a) fixées sur l'élément de support (4) et étant, d'autre part, articulés à leur extrémité aval sur l'extrémité aval des volets de divergent (5).

8. Dispositif de tuyère de turboréacteur selon l'une quelconque des revendications 1 à 7 caractérisé en ce que ladite tuyère est reliée audit canal (1) de circulation des gaz par l'intermédiaire de biellettes (51) parallèles à l'axe du canal (1).

**Patentansprüche**

1. Düse für Strahlturbine an einer Austrittsdüse am stromab gerichteten Ende eines Austrittskanals (1) eines Strahltriebwerks, ausgestattet mit

— mindestens zwei ringförmigen Sätzen von Klappen (2, 5), deren Neigung gegenüber der Achse der genannten Sätze einstellbar ist und die eine Düse vom Konvergenz-Divergenz-Typ mit stetiger Einschnürung bilden,

— einem ringförmigen Bauelement (4), das gelenkig mit jeder Klappe (2) des ersten Satzes verbunden ist,

— einer Serie von Betätigungsvorrichtungen, die jeweils einer Klappe jedes der beiden Sätze zugeordnet sind, um die Neigung dieser Klappen (2, 5) gegenüber der Achse der beiden Sätze einzustellen,

— und einer Serie von sogenannten Synchronisierungsvorrichtungen (21 bis 26), die alle Betätigungsvorrichtungen in der Weise miteinander verbinden, daß diese Betätigungsvorrichtungen eine zylinderartige, radial verformbare mechanische Gruppe bilden, die einen einzigen Freiheitsgrad besitzt,

dadurch gekennzeichnet, daß das ringförmige Bauelement (4) von dem Kanal getrennt ist und ein Tragelement bildet, das gleichzeitig die Klappen (2) des ersten Satzes und die Betätigungsvorrichtungen trägt.

2. Düse für Strahlturbine eines Strahltriebwerks nach Anspruch 1, dadurch gekennzeichnet, daß jede Klappe (2) des den Konvergenzabschnitt bildenden ersten Satzes mit ihrem relativ zu der Bewegungsrichtung der Gase in der Düse stromauf gerichteten Ende um eine Achse (3) an dem Tragelement (4) und jede Klappe (5) des den Divergenzabschnitt bildenden zweiten Satzes mit ihrem stromauf gerichteten Ende um eine Achse (6) an dem stromab gerichteten Ende einer Klappe (2) des Konvergenzabschnitts schwenkbar angeordnet ist.

3. Düse für Strahlturbine eines Strahltriebwerks, nach Anspruch 1 oder 2, dadurch gekennzeichnet, daß jede Betätigungsvorrichtung mindestens ein Kraftübertragungselement (15) aufweist, das drehbar um eine Achse (17) an dem Tragelement (4) angeordnet und für seinen Drehantrieb einem Antriebsorgan (12) zugeordnet ist, das von dem Tragelement (4) getragen wird, und daß das Kraftübertragungselement (15) eine als Wirkfläche bezeichnete Stützfläche (19) aufweist, die auf eine als Aufnahmefläche bezeichnete Stützfläche (20) der zugeordneten Klappe (2) des Konvergenzabschnitts einwirkt.

4. Düse für Strahlturbine eines Strahltriebwerks, nach Anspruch 3, dadurch gekennzeichnet, daß die Kraftübertragungselemente (15) untereinander in der Weise verbunden sind, daß sie eine kinematische Synchronisierungskette bilden.

5. Düse für Strahlturbine eines Strahltriebwerks, nach Anspruch 3 oder 4, dadurch gekennzeichnet, daß die Stützflächen (19, 20) in der Weise ausgebildet sind, daß sie bei einer Rotationsverlagerung der Klappen (2) und der Kraftübertragungselemente (15) schlupffrei aufeinander abrollen können, und in der Weise, daß die Bahn der Stützfläche (19) des Kraftübertragungselements (15) im wesentlichen senkrecht zu der Ebene der Stützfläche (20) der entsprechenden Klappe (2) des Konvergenzabschnitts verläuft.

6. Düse für Strahlturbine eines Strahltriebwerks, nach einem der Ansprüche 3 bis 5, dadurch gekennzeichnet, daß die Aufnahmestützfläche (20) der Klappe (2) des Konvergenzabschnitts sich an dem, bezogen auf die Bewegungsrichtung der Gase in der Düse, stromab gelegenen Ende dieser Klappe befindet.

7. Düse für Strahlturbine eines Strahltriebwerks, nach einem der Ansprüche 1 bis 6, dadurch gekennzeichnet, daß diese Düse einen dritten ringförmigen Satz von Klappen (7) vom Typ der kalten Klappen besitzt, deren Neigung gegenüber der Achse dieses dritten Satzes einstellbar ist, und daß die Klappen (7) einerseits mit ihrem stromauf gerichteten Ende an an dem Tragelement (4) befestigten Gabelbügeln (8a) und andererseits mit ihrem stromab gerichteten Ende an dem stromab gerichteten Ende der Klappen (5) des Divergenzabschnitts angelenkt sind.

8. Düse für Strahlturbine eines Strahltriebwerks, nach einem der Ansprüche 1 bis 7, dadurch gekennzeichnet, daß die Düse mit dem Gasumlaufkanal (1) durch parallel zur Achse des Kanals (1) verlaufende Schwingarme (51) verbunden ist.

## Claims

1. Nozzle device applied to a jet nozzle disposed at the downstream end of a jet pipe (1) of a jet engine, of the type comprising

— at least two annular blade assemblies (2, 5) of adjustable inclination with respect to the axis of the said assemblies, constituting a nozzle of the convergent-divergent type with a continuous throat,
— a structural element (4), of annular shape, connected in a pivotal manner to each blade (2) of the first assembly,
— a series of control devices of which each is associated with a blade of each of the two said assemblies in order to adjust the inclination of these blades (2, 5) with respect to the axis of the two assemblies,
— and a series of devices termed synchronisation devices (21—26) inter-connecting all the control devices in a manner such that these control devices form a mechanical assembly of the radially deformable cylindrical type having a single degree of freedom,

characterised in this that the annular structural element (4) is separated from the duct and constitutes a support element carrying both the blades (2) of the first assembly and the control devices.

2. Turbo-jet engine nozzle device according to claim 1 characterised in this that each blade (2) of the first assembly constituting the convergent is pivoted, at its upstream end, relatively to the direction of motion of the gases in the nozzle, about an axis (3) on the support element (4) and each blade (5) of the second assembly constituting the divergent is pivoted, at its upstream end, about an axis (6) on the downstream end of a blade of the convergent (2).

3. Turbo-jet engine nozzle device according to either of claims 1 or 2 characterised in this that each control device comprises at least one force transmission member (15) rotatably mounted about an axis (17) on the support member (4) and associated for driving in rotation with a motor member (12) carried by the said support member (4), this force transmission member (15) having a bearing surface (19), termed action surface, spaced from the said axis of rotation (17), capable of acting on a bearing surface (20) termed reception surface of the corresponding convergent blade (2).

4. Turbo-jet engine nozzle device according to claim 3 characterised in this that the force transmission members (15) are inter-connected in such a manner as to constitute a synchronized kinematic chain.

5. Turbo-jet engine nozzle device according to either of claims 3 or 4 characterised in this that the said bearing surfaches (19, 20) are shaped in such a manner as to be capable of rolling without sliding one on the other during rotational displacement of the blades (2) and of the force transmission members (15) and in such a manner that the path of the bearing surface (19) of the force transmission member (15) is substantially perpendicular to the plane of the bearing surface (20) of the corresponding convergent blade (2).

6. Turbo-jet engine nozzle device according to one of claims 3 to 5 characterised in this that the said bearing reception surface (20) of the convergent blade (2) lies at the downstream end of the said blade, relatively to the direction of motion of the gases in the nozzle.

7. Turbo-jet engine nozzle device according to any one of claims 1 to 6 characterised in this that the said nozzle comprises a third annular assembly of blades (7), of adjustable inclination with respect to the axis of the said assembly, of the cold blade type, the said blades (7) being, on the one hand, pivoted at their upstream ends on clevises (8a) secured on the support member (4) and being, on the other hand, pivoted at their downstream ends on the downstream end of the divergent blades (5).

8. Turbo-jet engine nozzle device according to one of claims 1 to 7 characterised in this that the said nozzle is connected to the said duct (1) for the flow of gas through the intermediary of rods (51) parallel to the axis of the duct (1).

Fig-1

0 033 044

0 033 044

Fig_2

53

51 — 50

54
52

$\underline{1}$
$\underline{25}$

8a

$\underline{10}$    111    $\underline{11}$
110'

22a
22

3a
21
107'    18
3    15a    58
16a    $\underline{15}$
12
14
$\underline{12a}$    12b
13
14
3a    3
107    18    110

9a
9
$\underline{5}$
9

I    I

Fig. 3